# EUROPEAN PATENT APPLICATION

(11) **EP 4 716 202 A1**
(43) Date of publication of application: **25.03.2026**
(21) Application number: 25157964.5
(22) Date of filing: 14.02.2025
(51) Int. Cl.: H04N 1/00

(54) **IMAGE PROCESSING SYSTEM, IMAGE SCANNING SYSTEM, PROGRAM, AND IMAGE PROCESSING METHOD**

(30) Priority: 24.09.2024 JP 2024165674
(71) Applicant: FUJIFILM Business Innovation Corp., Minato-ku Tokyo (JP)
(72) Inventor: NODA, Hisashi, Yokohamashi, Kanagawa (JP); KATO, Seishiro, Yokohamashi, Kanagawa (JP); HAYASHI, Kazuo, Yokohamashi, Kanagawa (JP)
(74) Representative: Becker Kurig & Partner Patentanwälte mbB

(57) **Abstract**

An image processing system includes a processor configured to: respectively obtain provisional positions of edges on both sides of a document in a main scanning direction from a preset reference position, from image information obtained by scanning a first surface of the document; respectively obtain provisional positions of edges on both sides of the document in the main scanning direction from the reference position, from image information obtained by scanning a second surface of the document; and respectively compare the provisional positions of the corresponding edges of the document in the main scanning direction and determine that there is an erroneous detection in the provisional positions of the edges in a case where the provisional positions of the corresponding edges are different from each other.

## Description

### BACKGROUND OF THE INVENTION

### (i) Field of the Invention

The present disclosure relates to an image processing system, an image scanning system, a program, and an image processing method.

### (ii) Description of Related Art

JP2022-124604A discloses an image scanning device. The image scanning device includes a scanning unit, a driving unit, a storage unit, and a control unit. The scanning unit scans a document and outputs a scanning result of the document. The driving unit moves the document and the scanning unit relative to each other in a relative movement direction. The storage unit stores scanned image data based on the scanning result and analysis image data that is analysis image data based on the scanning result and that is used to discriminate whether a region is a document region or a background region outside the document region. The control unit performs a dirt detection process of detecting a dirt position of the scanning unit in a pixel column direction intersecting the relative movement direction, and a cutout process of cutting out the document region from the scanned image data based on the analysis image data. In addition, the control unit performs a search for an edge candidate position where the background region changes to the document region, from an edge portion toward an inner side of the analysis image data in the pixel column direction in the cutout process. Then, the control unit continues the search in a case where the searched edge candidate position corresponds to the dirt position. On the other hand, the control unit cuts out the document region from the scanned image data at the searched edge candidate position in a case where the searched edge candidate position does not correspond to the dirt position.

### SUMMARY OF THE INVENTION

An object of the present disclosure is to suppress erroneous detection of an edge position of a document, as compared to a configuration in which positions of edges on both sides of the document in a main scanning direction are obtained from image information obtained by scanning one side of the document.

According to a first aspect of the present disclosure, there is provided an image processing system including: a processor configured to: respectively obtain provisional positions of edges on both sides of a document in a main scanning direction from a preset reference position, from image information obtained by scanning a first surface of the document; respectively obtain provisional positions of edges on both sides of the document in the main scanning direction from the reference position, from image information obtained by scanning a second surface of the document; and respectively compare the provisional positions of the corresponding edges of the document in the main scanning direction and determine that there is an erroneous detection in the provisional positions of the edges in a case where the provisional positions of the corresponding edges are different from each other.

According to a second aspect of the present disclosure, in the image processing system of the first aspect, the processor may be configured to: in a case where the provisional positions of the corresponding edges are the same, set the provisional positions of the edges as correct positions of the edges; and in a case where the provisional positions of the corresponding edges are different from each other, set a provisional position of an edge that is closer to a center position of main scanning of the document as a correct position of the edge.

According to a third aspect of the present disclosure, in the image processing system of the first aspect, the processor may be configured to: in a case where the provisional positions of the corresponding edges are the same, set the provisional positions of the edges as correct positions of the edges; in a case where the provisional positions of the corresponding edges are different from each other, determine presence or absence of the document by analyzing image information of a region between a provisional position of an edge that is closer to a center of the document in the main scanning direction and a provisional position of an edge that is farther from the center; in a case where determination is made that there is no document, set the provisional position of the edge that is closer to a center position of main scanning of the document as a correct position of the edge; and in a case where determination is made that there is a document, set the provisional position of the edge that is farther from the center as the correct position of the edge.

According to a fourth aspect of the present disclosure, in the image processing system of any one of the first to third aspects, the reference position may be a start position of main scanning in scanning the document.

According to a fifth aspect of the present disclosure, in the image processing system of any one of the first to third aspects, the reference position may be a center position of main scanning in scanning the document.

According to a sixth aspect of the present disclosure, in the image processing system of any one of the first to fifth aspects, the processor may be configured to: acquire information regarding a standard size of the document; and determine the standard size of the document from correct positions of the edges on both sides of the document.

According to a seventh aspect of the present disclosure, there is provided an image scanning system including: a first scanning unit that is disposed on a transport path of a document and scans a first surface of the document; a second scanning unit that is disposed on the transport path and scans a second surface of the document; and the image processing system according to any one of the first to sixth aspects that obtains positions of edges on both sides of the document in a main scanning direction from each image information scanned by the first scanning unit and the second scanning unit.

According to an eighth aspect of the present disclosure, there is provided a program for causing a computer to execute a process including: respectively obtaining provisional positions of edges on both sides of a document in a main scanning direction from a preset reference position, from image information obtained by scanning a first surface of the document; respectively obtaining provisional positions of edges on both sides of the document in the main scanning direction from the reference position, from image information obtained by scanning a second surface of the document; and respectively comparing the provisional positions of the corresponding edges of the document in the main scanning direction and determining that there is an erroneous detection in the provisional positions of the edges in a case where the provisional positions of the corresponding edges are different from each other.

According to a ninth aspect of the present disclosure, there is provided an image processing method including: respectively obtaining provisional positions of edges on both sides of a document in a main scanning direction from a preset reference position, from image information obtained by scanning a first surface of the document; respectively obtaining provisional positions of edges on both sides of the document in the main scanning direction from the reference position, from image information obtained by scanning a second surface of the document; and respectively comparing the provisional positions of the corresponding edges of the document in the main scanning direction and determining that there is an erroneous detection in the provisional positions of the edges in a case where the provisional positions of the corresponding edges are different from each other.

**In** the image processing system of the first aspect of the present disclosure, the erroneous detection of the edge position of the document can be suppressed, as compared to a configuration in which the positions of the edges on both sides of the document in the main scanning direction are obtained from image information obtained by scanning one side of the document.

**In** the image processing system of the second aspect of the present disclosure, erroneous setting of the edge position of the document can be suppressed, as compared to a configuration in which the positions of the edges on both sides of the document in the main scanning direction that are obtained from the image information obtained by scanning one side of the document are set as the correct positions of the edges.

In the image processing system of the third aspect of the present disclosure, the erroneous setting of the edge position of the document can be suppressed, as compared to a configuration in which the positions of the edges on both sides of the document in the main scanning direction that are obtained from the image information obtained by scanning one side of the document are set as the correct positions of the edges.

In the image processing system of the fourth aspect of the present disclosure, the erroneous detection of the edge position of the document can be suppressed, as compared to a configuration in which the reference position is set to a position outside a range of main scanning.

In the image processing system of the fifth aspect of the present disclosure, the erroneous detection of the edge position of the document can be suppressed, as compared to a configuration in which the reference position is set to a position outside the range of main scanning.

In the image processing system of the sixth aspect of the present disclosure, the standard size of the document can be understood.

In the image scanning system of the seventh aspect of the present disclosure, the erroneous detection of the edge position of the document can be suppressed, as compared to a configuration in which the positions of the edges on both sides of the document in the main scanning direction are obtained from the image information obtained by scanning one side of the document.

In the program of the eighth aspect of the present disclosure, the erroneous detection of the edge position of the document can be suppressed, as compared to a case where the positions of the edges on both sides of the document in the main scanning direction are obtained from the image information obtained by scanning one side of the document.

In the image processing method of the ninth aspect of the present disclosure, the erroneous detection of the edge position of the document can be suppressed, as compared to a case where the positions of the edges on both sides of the document in the main scanning direction are obtained from the image information obtained by scanning one side of the document.

### BRIEF DESCRIPTION OF THE DRAWINGS

Exemplary embodiment(s) of the present invention will be described in detail based on the following figures, wherein:
Fig. 1 is a side cross-sectional view of a document scanning device according to an exemplary embodiment of the present disclosure;
Fig. 2 is a block diagram of the document scanning device shown in Fig. 1;
Fig. 3 is a diagram for comparing both edges of image information on a front surface of a document and both edges of image information on a back surface;
Fig. 4 is a diagram for comparing both edges of the image information on the front surface of the document and both edges of the image information on the back surface;
Fig. 5 is a diagram for comparing both edges of the image information on the front surface of the document and both edges of the image information on the back surface;
Fig. 6 is a diagram for comparing both edges of the image information on the front surface of the document and both edges of the image information on the back surface;
Fig. 7 is a diagram for comparing both edges of the image information on the front surface of the document and both edges of the image information on the back surface;
Fig. 8 is a flowchart illustrating a flow of a document scanning operation of the document scanning device of the present disclosure; and
Fig. 9 is a side cross-sectional view of an image forming apparatus according to another exemplary embodiment of the present disclosure.

### DETAILED DESCRIPTION OF THE INVENTION

Hereinafter, a document scanning device according to an exemplary embodiment of the present disclosure will be described with reference to the accompanying drawings. The document scanning device of the present exemplary embodiment is an example of an image scanning system of the present disclosure. Since the image processing system of the present disclosure is used in the image scanning system, the image processing system of the present disclosure is also used in the document scanning device of the present exemplary embodiment.

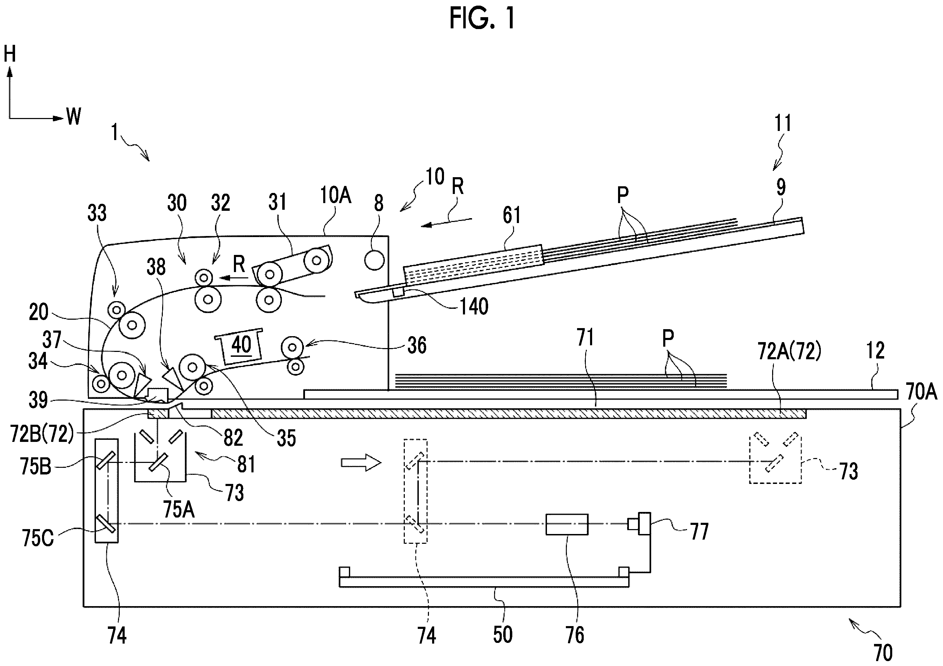

The document scanning device of the present exemplary embodiment will be described using Figs. 1 to 8. In the present specification and the drawings, W indicates a device width direction (width direction), D indicates a device depth direction (depth direction), and H indicates a device vertical direction (vertical direction). Additionally, the width direction, the depth direction, and the vertical direction are orthogonal to each other.

### [Document Scanning Device]

As shown in Fig. 1, a document scanning device 1 of the present exemplary embodiment is a device that scans an image formed on a document P. The document scanning device 1 scans the image of the document P in a state in which the document P is placed on a document table 71. In addition, the document scanning device 1 can also scan the image of the document P using a transport unit 10, which will be described below. In the present exemplary embodiment, the document scanning device 1 includes an automatic duplex document feeding device. The automatic duplex document feeding device is a device capable of selectively scanning an image formed on an upper surface (front surface) or both surfaces of the document P loaded onto a loading tray.

The document scanning device 1 includes the transport unit 10, a scanner 70, a scanner 40, and a controller 50.

### <Transport Unit 10>

As shown in Fig. 1, the transport unit 10 sequentially transports a plurality of documents P one by one from a document bundle in which the documents P are bundled. The transport unit 10 includes a housing 10A, a document loading portion 11, a document accommodation portion 12, and a transport unit 30.

The housing 10A has a box shape in which a part of one surface in the width direction is open. Each component of the transport unit 10 is housed inside the housing 10A. A transport passage 20 as an example of a transport path is formed inside the housing 10A. Specifically, the transport passage 20 is a passage that starts from one end side in the width direction on an upper side of the housing 10A, turns back on the other end side of the housing 10A in the width direction to the one end side, and ends on the one end side in the width direction on a lower side of the housing 10A. That is, the transport unit 10 transports the document P along the transport passage 20 inside the housing 10A. A direction in which the transport unit 10 transports the document P is indicated as a transport direction R.

### (Document Loading Portion)

The document loading portion 11 is configured such that the document bundle of the documents P is loaded. The document loading portion 11 is disposed outside the housing 10A on the one end side of the housing 10A in the width direction. The document loading portion 11 includes a document tray 9, a side guide 61, and a loading detection sensor 140.

The document tray 9 is formed in a plate shape extending in the depth direction and the width direction. The document tray 9 is configured such that the document P is loaded onto a loading surface, in a state of being connected to one end of the housing 10A. The document tray 9 is inclined toward the transport passage 20 with a connection portion to the housing 10A as a lowermost portion. The document tray 9 is loaded with the documents P that are uniformly aligned in size and orientation. Additionally, the document tray 9 may be loaded with a plurality of documents P having different sizes and orientations in a mixed state. In the present exemplary embodiment, a method in which the plurality of documents P having different sizes and orientations are loaded in a mixed state and are scanned is called a mixed mode.

The side guide 61 is a plate that extends in the width direction and stands upright from the document tray 9. A pair of side guides 61 are disposed in a state of being spaced apart from each other in a direction (depth direction) orthogonal to the transport direction R of the document P. The side guides 61 position the document P in the depth direction by being pressed against end portions of the document P in the depth direction. The side guides 61 are configured to change a spacing distance in the depth direction within a predetermined range using slide grooves (not shown). That is, the side guide 61 can guide the document P in response to variations in the size and orientation of the document P.

In the mixed mode, the plurality of documents having different sizes and orientations are loaded onto the document tray 9 in a state in which end portions are pressed by the side guides 61.

The loading detection sensor 140 is disposed at a leading end portion of the document tray 9 in the transport direction R and detects whether or not the document P is loaded onto the document tray 9.

### (Document Accommodation Portion 12)

The document accommodation portion 12 is formed in a plate shape extending in the depth direction and the width direction. The document accommodation portion 12 is disposed outside the housing 10A on the one end side of the housing 10A in the width direction. The document accommodation portion 12 is disposed below the document loading portion 11, following the transport passage 20. The document accommodation portion 12 accommodates the document P after scanning, which will be described below, ends.

### (Transport Unit 30)

As shown in Fig. 1, the transport unit 30 transports the document P from the document loading portion 11 to the document accommodation portion 12 along the transport passage 20 inside the housing 10A. The transport unit 30 includes a transport roller 8, a plurality of roller pairs, a sensor, and a platen member 39.

The transport unit 30 includes, as the plurality of roller pairs, first rollers 31, second rollers 32, third rollers 33, fourth rollers 34, fifth rollers 35, and sixth rollers 36 in order from an upstream side in the transport direction R. The plurality of roller pairs are each disposed to sandwich the transport passage 20 and are rotationally driven by driving means (not shown). The fourth rollers 34 are registration rollers. Hereinafter, in the present specification, the fourth rollers 34 will be referred to as registration rollers 34.

In addition, the transport unit 30 includes, as the sensors, a registration sensor 37 and an out sensor 38 in order from the upstream side in the transport direction R.

The registration sensor 37 is disposed downstream of the registration rollers 34 in the transport direction R in the transport passage 20 and detects the presence or absence of the document P before scanning, which will be described below.

The out sensor 38 is disposed downstream of the registration sensor 37 in the transport direction R and detects the presence or absence of the document P after scanning.

The platen member 39 is disposed downstream of the registration sensor 37 in the transport direction R and upstream of the out sensor 38 in the transport direction R. The platen member 39 presses the document P fed by the registration rollers 34 downward against a first platen glass 72A, which will be described below.

### <Scanner 70>

As shown in Fig. 1, the scanner 70 has a function of scanning an image formed on the document P. The scanner 70 is disposed on the transport passage 20 and scans the image formed on a front surface S as a first surface of the document P transported by the transport unit 10. The scanner 70 is an example of a first scanning unit of the present disclosure.

The scanner 70 includes a housing 70A, the document table 71, a platen glass 72, a full-rate carriage 73, and a half-rate carriage 74. Additionally, the scanner 70 includes an imaging lens 76, a CCD image sensor 77, and a guide member 82.

The housing 70A is disposed below the housing 10A of the transport unit 10 and is a box extending from the other end of the housing 10A toward the one end side. The housing 70A houses each component of the scanner 70.

The document table 71 is disposed below the document accommodation portion 12 and constitutes an upper surface of the scanner 70. The document table 71 is used in a case of scanning the image formed on the document P without using the transport unit 10.

The platen glass 72 is formed of a plate-shaped glass and constitutes a part of the document table 71. The platen glass 72 allows light for scanning the image formed on the document P to pass through. The platen glass 72 includes the first platen glass 72A and a second platen glass 72B.

The first platen glass 72A is a plate-shaped glass on which the document P is placed in a stationary state during scanning.

The second platen glass 72B is formed in an elongated shape in the depth direction and is disposed below the platen member 39 in a state of facing the platen member 39. The second platen glass 72B is an opening portion for light for scanning the image of the front surface S of the document P while the document P is being transported by the transport unit 10.

The full-rate carriage 73 is a member that is disposed below the second platen glass 72B and that guides light toward the document P transported by the transport unit 10. The full-rate carriage 73 includes a scanner light source 81 and a first mirror 75A. The scanner light source 81 irradiates the document P with light. The first mirror 75A receives reflected light obtained from the document P.

The full-rate carriage 73 has a movement mode in which the full-rate carriage 73 moves in the width direction below the first platen glass 72A and a stationary mode in which the full-rate carriage 73 remains stationary below the second platen glass 72B. In a case where the document P is loaded on the document table 71, the full-rate carriage 73 executes the movement mode. On the other hand, in a case where the document P is loaded on the document tray 9, the full-rate carriage 73 executes the stationary mode.

The half-rate carriage 74 is disposed below the first platen glass 72A and scans the image through a full scan of the first platen glass 72A. In addition, the half-rate carriage 74 supplies the reflected light obtained from the full-rate carriage 73 to the CCD image sensor 77, which will be described below. In a case where the document P is loaded on the document table 71, the half-rate carriage 74 executes the movement mode. On the other hand, in a case where the document P is loaded on the document tray 9, the half-rate carriage 74 executes the stationary mode.

The half-rate carriage 74 includes a second mirror 75B and a third mirror 75C. The second mirror 75B is disposed to face the first mirror 75A and reflects the reflected light obtained from the first mirror 75A to the third mirror 75C. The third mirror 75C is disposed to face the second mirror 75B and reflects the reflected light obtained from the second mirror 75B to the CCD image sensor 77, which will be described below.

The imaging lens 76 is a lens that is disposed below the first platen glass 72A to face the third mirror 75C. The imaging lens 76 optically reduces the image of the reflected light reflected by the third mirror 75C.

The CCD image sensor 77 is an imaging unit disposed on the identical optical axis to the imaging lens 76 in a state of facing the imaging lens 76. The CCD image sensor 77 receives an optical image reduced by the imaging lens 76, performs photoelectric conversion into an electrical signal, and scans the image of the document P.

The guide member 82 is a protrusion disposed between the first platen glass 72A and the second platen glass 72B. The guide member 82 guides the document P that has passed between the second platen glass 72B and the platen member 39 toward the fifth rollers 35.

### <Scanner 40>

As shown in Fig. 1, the scanner 40 has a function of scanning an image formed on the document P. The scanner 40 is disposed on the transport passage 20 and scans an image formed on a back surface B (a surface opposite to the front surface S) as a second surface of the document P transported by the transport unit 10. Specifically, the scanner 40 is disposed inside the housing 10A of the transport unit 10, downstream of the fifth rollers 35. The scanner 40 is an example of a second scanning unit of the present disclosure.

The images formed on both surfaces of the document P are scanned by the scanner 70 and the scanner 40.

### <Controller 50>

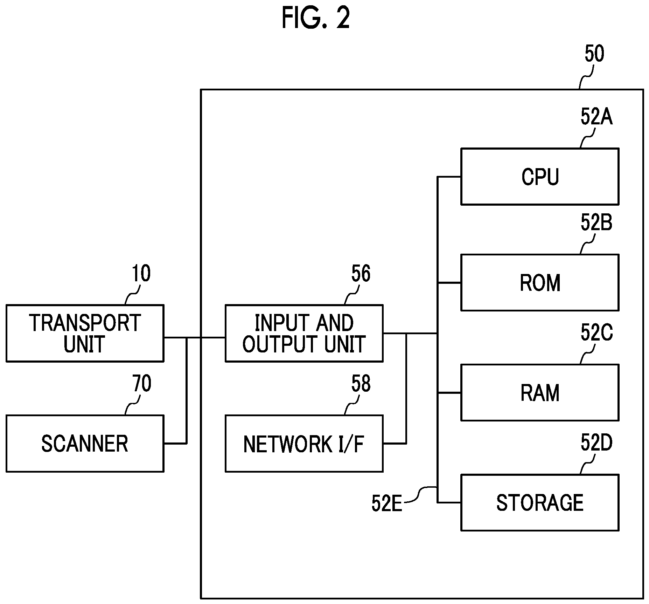

As shown in Fig. 2, the controller 50 includes components, that is, a central processing unit (CPU) 52A, a read only memory (ROM) 52B, a random access memory (RAM) 52C, a storage 52D, an input and output unit 56, and a network interface (network I/F) 58. The components are communicably connected to each other via a bus 52E.

The CPU 52A is a central processing unit and executes various programs or controls each unit. That is, the CPU 52A reads a program from the ROM 52B or the storage 52D and executes the program using the RAM 52C as a work area. The CPU 52A is an example of a processor of the present disclosure. A control program executed by the CPU 52A is an example of an information processing program. The CPU 52A performs control of each of the components described above and various computational processes in accordance with the programs recorded in the ROM 52B or the storage 52D.

The ROM 52B stores various programs and various types of data. The RAM 52C serves as a work area to temporarily store programs or data. The storage 52D is configured with a hard disk drive (HDD) or a solid state drive (SSD) and stores various programs including an operating system and various types of data.

The input and output unit 56 receives signals from each component of the document scanning device 1, for example, the transport unit 10, the scanner 70 or 40, or the like, in order to exhibit the functions of the document scanning device 1.

The network I/F 58 is an interface for communicating with other devices such as a database and a server (not shown), and for example, standards such as Ethernet (registered trademark), FDDI, or Wi-Fi (registered trademark) are used.

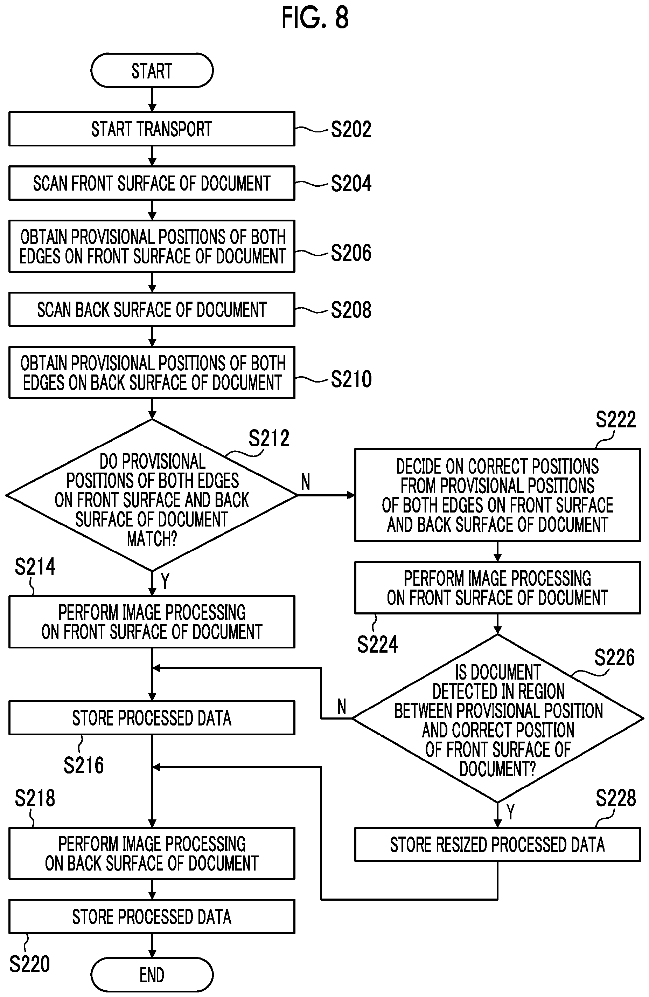

Next, a flow of an image scanning operation by the document scanning device 1 according to the present exemplary embodiment will be described with reference to Fig. 8.

In step S202, in a case where a scanning operation of the document scanning device 1 is executed in a state in which the document P is loaded on the document tray 9, the CPU 52A controls each component of the document scanning device 1 to start the transport of the document P.

In step S204, the CPU 52A causes the scanner 70 to scan the front surface S of the transported document P. Image information (also referred to as scanned information) of the front surface S scanned by the scanner 70 is stored in a storage area of the controller 50. The storage area is, for example, the RAM 52C or the storage 52D.

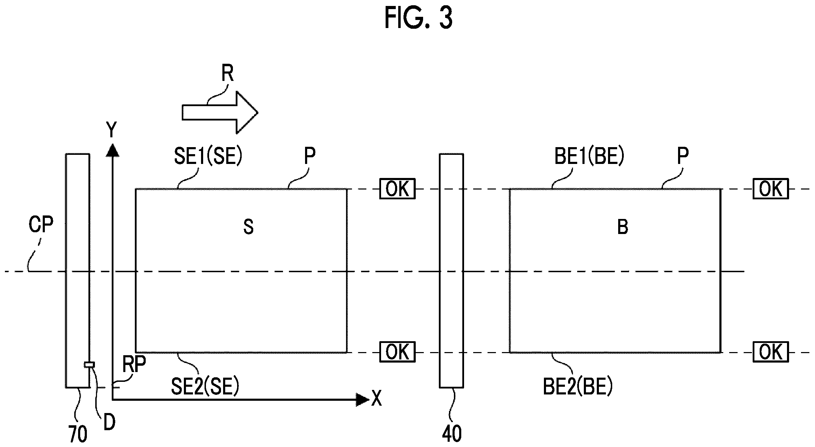

In step S206, the CPU 52A respectively obtains provisional positions SE of edges E on both sides of the document P in the main scanning direction, from the image information scanned by the scanner 70. Specifically, the CPU 52A respectively obtains the provisional positions SE of both edges E from a preset reference position RP, from the scanned image information of the front surface S. More specifically, the CPU 52A obtains a provisional position SE1 of an edge E1 (an upper edge in Fig. 3) from the scanned image information of the front surface S. Similarly, the CPU 52A obtains a provisional position SE2 of an edge E2 (a lower edge in Fig. 3) from the scanned image information of the front surface S. In the present exemplary embodiment, the provisional positions SE of the edges E of the front surface S are obtained by analyzing the scanned image information of the front surface S. Additionally, an arrow Y in Fig. 3 indicates the main scanning direction, and an arrow X indicates a sub-scanning direction.

In the present exemplary embodiment, as an example, a start position of main scanning in scanning the document P is set as the reference position RP.

In step S208, the CPU 52A causes the scanner 40 to scan the back surface B of the transported document P. The image information of the back surface B scanned by the scanner 40 is stored in the storage area of the controller 50 described above.

In step S210, the CPU 52A respectively obtains provisional positions BE of both edges E of the document P, from the image information scanned by the scanner 40. Specifically, the CPU 52A respectively obtains the provisional positions BE of both edges E from the reference position RP, from the scanned image information of the back surface B. More specifically, the CPU 52A obtains a provisional position BE1 of the edge E1 from the scanned image information of the back surface B. Similarly, the CPU 52A obtains a provisional position BE2 of the edge E2 from the scanned image information of the back surface B. In the present exemplary embodiment, the provisional positions BE of the edges E of the back surface B are obtained by analyzing the scanned image information of the back surface B.

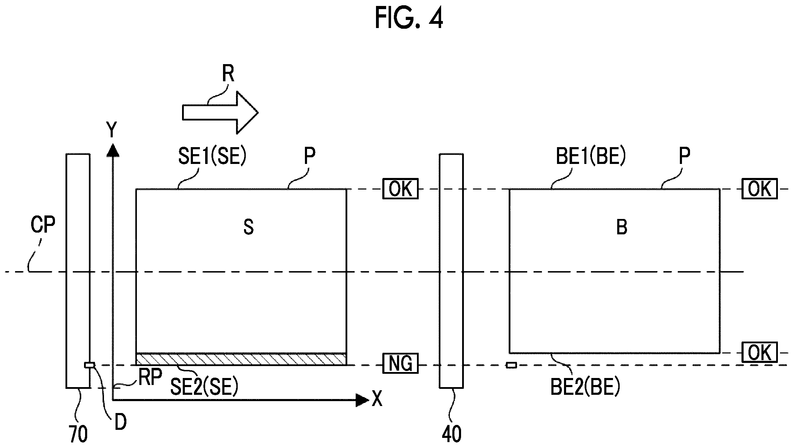

In step S212, the CPU 52A respectively compares the provisional positions of the corresponding edges E of the document P in the main scanning direction. Specifically, the CPU 52A compares whether the provisional position SE1 of the edge E1 on the front surface S of the document P matches the provisional position BE1 of the edge E1 on the back surface B. In addition, the CPU 52A compares whether the provisional position SE2 of the edge E2 on the front surface S of the document P matches the provisional position BE2 of the edge E2 on the back surface B. As a result of comparison, in a case where either the provisional position SE1 and the provisional position BE1, or the provisional position SE2 and the provisional position BE2 do not match (refer to Figs. 4 to 6), that is, in a case where the provisional positions are different from each other, the CPU 52A determines that there is an erroneous detection in the provisional positions of the edges E. On the other hand, in a case where both the provisional position SE1 and the provisional position BE1, and the provisional position SE2 and the provisional position BE2 match (refer to Fig. 3), the CPU 52A determines that there is no erroneous detection in the provisional positions SE of the edges E. In Figs. 3 to 6, "OK" indicates that the provisional positions SE of the corresponding edges E on the front surface S and the back surface B match. On the other hand, "NG" in Figs. 3 to 6 indicates that the provisional positions SE of the corresponding edges E on the front surface S and the back surface B do not match.

In a case where the CPU 52A determines that there is no erroneous detection, the CPU 52A sets the provisional positions SE of the edges E of the front surface S as the correct positions and transitions to step S214. Additionally, in a case where the CPU 52A determines that there is an erroneous detection, the CPU 52A transitions to step S222.

In step S214, the CPU 52A performs image processing on the image information of the front surface S of the document P.

In step S216, the CPU 52A stores the processed image information (processed data) of the front surface S subjected to the image processing in the storage area of the controller 50.

In step S218, the CPU 52A performs image processing on the image information of the back surface B of the document P.

In step S220, the CPU 52A stores the processed image information (processed data) of the back surface B subjected to the image processing in the storage area of the controller 50.

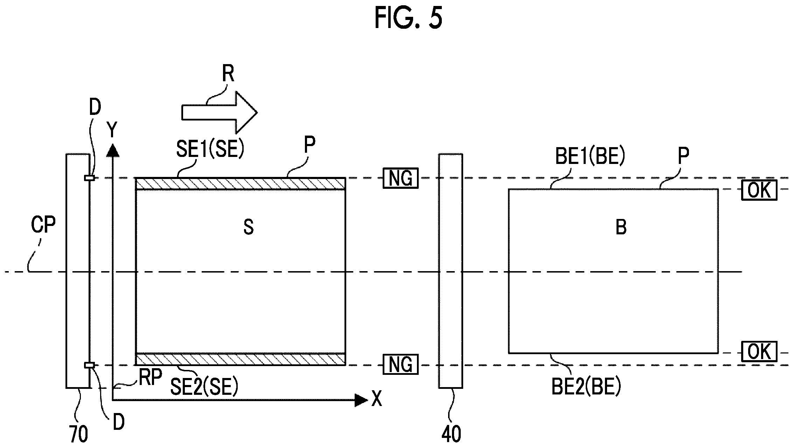

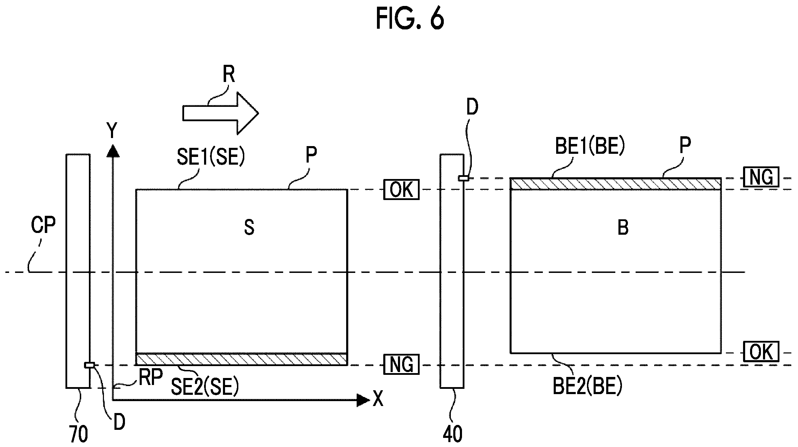

In step S222, the CPU 52A decides on the correct positions of both edges E from the provisional positions SE of both edges E on the front surface S of the document P and the provisional positions BE of both edges E on the back surface B. Specifically, the CPU 52A sets the provisional position SE of the edge E that is closer to a center position of main scanning of the document P as the correct position of the edge E, for the edges E in which the provisional positions do not match between the provisional position SE1 and the provisional position BE1 and between the provisional position SE2 and the provisional position BE2. The center position of main scanning is a center position in a main scanning region. In addition, the center position of main scanning is a position indicated by CP in Figs. 3 to 6. For example, as shown in Fig. 4, in a case where a paper piece D is attached to the scanner 70, the CPU 52A sets the provisional position BE2 of the back surface B that is closer to the center position CP as the correct position because the provisional position SE2 of the front surface S and the provisional position BE2 of the back surface B do not match. Further, for example, as shown in Fig. 5, in a case where the paper pieces D are attached to both sides of the scanner 70 in the main scanning direction, the CPU 52A sets the provisional position BE1 of the back surface B that is closer to the center position CP as the correct position because the provisional position SE1 of the front surface S and the provisional position BE1 of the back surface B do not match. Similarly, the CPU 52A sets the provisional position BE2 of the back surface B that is closer to the center position CP as the correct position because the provisional position SE2 of the front surface S and the provisional position BE2 of the back surface B do not match. Additionally, for example, as shown in Fig. 6, in a case where the paper piece D is attached to one side of the scanner 70 in the main scanning direction and the paper piece D is attached to the other side of the scanner 40 in the main scanning direction, the CPU 52A sets the provisional position SE1 of the front surface S that is closer to the center position CP as the correct position because the provisional position SE1 of the front surface S and the provisional position BE1 of the back surface B do not match. Further, the CPU 52A sets the provisional position BE2 of the back surface B that is closer to the center position CP as the correct position because the provisional position SE2 of the front surface S and the provisional position BE2 of the back surface B do not match.

In step S224, the CPU 52A performs image processing on the image information of the front surface S of the document P.

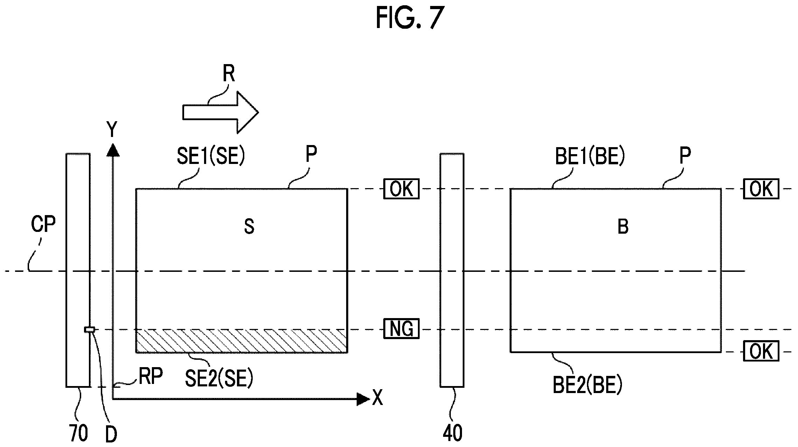

In step S226, the CPU 52A determines the presence or absence of the document P in a region between the provisional position and the correct position of the front surface S of the document as a result of the image processing. In a case where determination is made that there is no document P, the CPU 52A sets the provisional position SE of the edge E that is closer to the center position CP of the document P as the correct position of the edge and transitions to step S216. On the other hand, in a case where determination is made that there is a document P, the CPU 52A sets the provisional position BE2 of the edge E that is farther from the center as the correct position of the edge E2 (refer to Fig. 7), and transitions to step S228.

In step S228, the CPU 52A resizes the image information of the front surface S that has been subjected to the image processing, and stores the information (processed data) in the storage area of the controller 50. Thereafter, the CPU 52A transitions to step S218.

In a case where step S220 ends, the CPU 52A ends the image scanning operation by the document scanning device 1.

Information regarding a standard size of the document P may be stored in any of the ROM 52B, the RAM 52C, or the storage 52D. In this case, the CPU 52A may acquire the information regarding the standard size of the document P and determine the standard size of the document P from the correct positions of the edges E on both sides of the document P. The information regarding the standard size of the document P may be stored in advance in the ROM 52B and the storage 52D. In addition, the information regarding the standard size of the document P may be obtained through the network I/F 58 and temporarily stored in the RAM 52C.

Next, an operation of the present exemplary embodiment will be described.

In the present exemplary embodiment, the CPU 52A respectively compares the provisional positions of the corresponding edges E of the document P and determines that there is an erroneous detection in the provisional positions of the edges E in a case where the provisional positions of the corresponding edges E are different from each other. Therefore, for example, the erroneous detection of the edge position of the document P can be suppressed, as compared to a configuration in which the positions of the edges E on both sides of the document in the main scanning direction are obtained from the image information obtained by scanning one side of the document P.

In the present exemplary embodiment, the CPU 52A sets, in a case where the provisional positions of the corresponding edges E are the same, the provisional positions of the edges E as the correct positions of the edges E and sets, in a case where the provisional positions of the corresponding edges E are different from each other, the provisional position of the edge E that is closer to the center position CP of main scanning of the document P as the correct position of the edge E. Therefore, the erroneous setting of the edge position of the document P can be suppressed, as compared to a configuration in which the positions of both edges E of the document P that are obtained from the image information obtained by scanning one side of the document P are set as the correct positions of the edges E.

In the present exemplary embodiment, the CPU 52A determines, in a case where the provisional positions of the corresponding edges E are different from each other, the presence or absence of the document P by analyzing the image information of the region between the provisional position of the edge E that is closer to the center of the document P in the main scanning direction and the provisional position of the edge E that is farther from the center. Then, in a case where determination is made that there is no document P, the CPU 52A sets the provisional position of the edge E that is closer to the center position CP of main scanning of the document P as the correct position of the edge. Additionally, in a case where determination is made that there is a document P, the CPU 52A sets the provisional position of the edge E that is farther from the center as the correct position of the edge E. Therefore, the erroneous setting of the edge position of the document P can be suppressed, as compared to a configuration in which the positions of both edges E of the document P that are obtained from the image information obtained by scanning one side of the document P are set as the correct positions of the edges E.

In the present exemplary embodiment, the reference position RP is set as the start position of main scanning in scanning the document P. Therefore, the erroneous detection of the edge position of the document P can be suppressed, as compared to a configuration in which the reference position RP is set to a position outside a range of main scanning.

In the present exemplary embodiment, the CPU 52A acquires the information regarding the standard size of the document P and determines the standard size of the document P from the correct positions of both edges E of the document P. Therefore, the standard size of the document P can be understood.

### (Other Exemplary Embodiments)

In the above-mentioned exemplary embodiment, the start position of main scanning in scanning the document P is set as the reference position RP, but the present disclosure is not limited to this configuration. For example, the reference position RP may be set as the center position CP of main scanning in scanning the document P. In this case, similarly to a case where the reference position RP is set as the start position of main scanning, the erroneous detection of the edge position of the document P can be suppressed, as compared to a configuration in which the reference position RP is set to a position outside the range of main scanning.

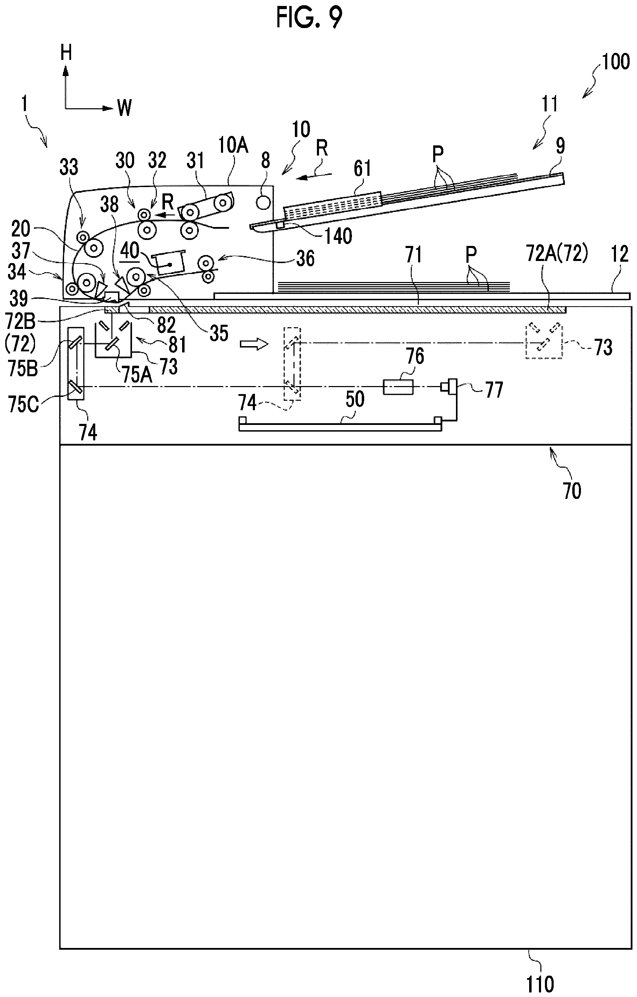

The image scanning system of the present disclosure may be applied to an image forming apparatus 100 shown in Fig. 9. The image forming apparatus 100 includes the document scanning device 1 of the exemplary embodiment mentioned above and an image forming unit 110. Specifically, in the image forming apparatus 100, the image forming unit 110 is disposed at a lower portion of the document scanning device 1. The image forming unit 110 has a function of forming an image, for example, on a medium such as paper. In addition, the image forming unit 110 can also form the image scanned by the document scanning device 1 on the medium. The effects obtained by the document scanning device 1 can also be achieved by the image forming apparatus 100.

The above-described processing by the controller 50 can also be implemented by a dedicated hardware circuit. In this case, the processing may be executed by a single piece of hardware or may be executed by a plurality of pieces of hardware.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

Additionally, the program for operating the controller 50 may be provided through a computer-readable recording medium such as a universal serial bus (USB) memory, a flexible disk, or a compact disc read only memory (CD-ROM) or may be provided online via a network such as the Internet. In this case, the program recorded on the computer-readable recording medium is typically transferred to and stored in a memory, a storage, or the like. Further, the program may be provided, for example, as standalone application software or may be incorporated into software of each device as a function of the controller 50.

Although the present disclosure has been described in detail using specific embodiments, the present disclosure is not limited to the exemplary embodiments. Employing various other exemplary embodiments within the scope of the present disclosure is apparent to practitioners skilled in the art.

### (Supplementary Notes)

(((1))) An image processing system comprising:
   a processor configured to:
   respectively obtain provisional positions of edges on both sides of a document in a main scanning direction from a preset reference position, from image information obtained by scanning a first surface of the document;
   respectively obtain provisional positions of edges on both sides of the document in the main scanning direction from the reference position, from image information obtained by scanning a second surface of the document; and
   respectively compare the provisional positions of the corresponding edges of the document in the main scanning direction and determine that there is an erroneous detection in the provisional positions of the edges in a case where the provisional positions of the corresponding edges are different from each other.
(((2))) The image processing system according to (((1))), wherein the processor is configured to:
   in a case where the provisional positions of the corresponding edges are the same, set the provisional positions of the edges as correct positions of the edges; and
   in a case where the provisional positions of the corresponding edges are different from each other, set a provisional position of an edge that is closer to a center position of main scanning of the document as a correct position of the edge.
(((3))) The image processing system according to (((1))), wherein the processor is configured to:
   in a case where the provisional positions of the corresponding edges are the same, set the provisional positions of the edges as correct positions of the edges;
   in a case where the provisional positions of the corresponding edges are different from each other, determine presence or absence of the document by analyzing image information of a region between a provisional position of an edge that is closer to a center of the document in the main scanning direction and a provisional position of an edge that is farther from the center;
   in a case where determination is made that there is no document, set the provisional position of the edge that is closer to a center position of main scanning of the document as a correct position of the edge; and
   in a case where determination is made that there is a document, set the provisional position of the edge that is farther from the center as the correct position of the edge.
(((4))) The image processing system according to any one of (((1))) to (((3))),
   wherein the reference position is a start position of main scanning in scanning the document.
(((5))) The image processing system according to any one of (((1))) to (((3))),
   wherein the reference position is a center position of main scanning in scanning the document.
(((6))) The image processing system according to any one of (((1))) to (((5))), wherein the processor is configured to:
   acquire information regarding a standard size of the document; and
   determine the standard size of the document from correct positions of the edges on both sides of the document.
(((7))) An image scanning system comprising:
   a first scanning unit that is disposed on a transport path of a document and scans a first surface of the document;
   a second scanning unit that is disposed on the transport path and scans a second surface of the document; and
   the image processing system according to any one of (((1))) to (((6))) that obtains positions of edges on both sides of the document in a main scanning direction from each image information scanned by the first scanning unit and the second scanning unit.
(((8))) A program for causing a computer to execute a process comprising:
   respectively obtaining provisional positions of edges on both sides of a document in a main scanning direction from a preset reference position, from image information obtained by scanning a first surface of the document;
   respectively obtaining provisional positions of edges on both sides of the document in the main scanning direction from the reference position, from image information obtained by scanning a second surface of the document; and
   respectively comparing the provisional positions of the corresponding edges of the document in the main scanning direction and determining that there is an erroneous detection in the provisional positions of the edges in a case where the provisional positions of the corresponding edges are different from each other.

**In** the image processing system of (((1))), the erroneous detection of the edge position of the document can be suppressed, as compared to a configuration in which the positions of the edges on both sides of the document in the main scanning direction are obtained from image information obtained by scanning one side of the document.

In the image processing system of (((2))), the erroneous setting of the edge position of the document can be suppressed, as compared to a configuration in which the positions of the edges on both sides of the document in the main scanning direction that are obtained from the image information obtained by scanning one side of the document are set as the correct positions of the edges.

In the image processing system of (((3))), the erroneous setting of the edge position of the document can be suppressed, as compared to a configuration in which the positions of the edges on both sides of the document in the main scanning direction that are obtained from the image information obtained by scanning one side of the document are set as the correct positions of the edges.

In the image processing system of (((4))), the erroneous detection of the edge position of the document can be suppressed, as compared to a configuration in which the reference position is set to a position outside a range of main scanning.

In the image processing system of (((5))), the erroneous detection of the edge position of the document can be suppressed, as compared to a configuration in which the reference position is set to a position outside the range of main scanning.

In the image processing system of (((6))), the standard size of the document can be understood.

In the image scanning system of (((7))), the erroneous detection of the edge position of the document can be suppressed, as compared to a configuration in which the positions of the edges on both sides of the document in the main scanning direction are obtained from the image information obtained by scanning one side of the document.

In the program of (((8))), the erroneous detection of the edge position of the document can be suppressed, as compared to a case where the positions of the edges on both sides of the document in the main scanning direction are obtained from the image information obtained by scanning one side of the document.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: document scanning device
100: image forming apparatus
P: document
BE: provisional position
SE: provisional position
S: front surface (first surface)
B: back surface (second surface)

## Claims

1. An image processing system comprising:
a processor configured to:
respectively obtain provisional positions of edges on both sides of a document in a main scanning direction from a preset reference position, from image information obtained by scanning a first surface of the document;
respectively obtain provisional positions of edges on both sides of the document in the main scanning direction from the reference position, from image information obtained by scanning a second surface of the document; and
respectively compare the provisional positions of the corresponding edges of the document in the main scanning direction and determine that there is an erroneous detection in the provisional positions of the edges in a case where the provisional positions of the corresponding edges are different from each other.

2. The image processing system according to claim 1, wherein the processor is configured to:
in a case where the provisional positions of the corresponding edges are the same, set the provisional positions of the edges as correct positions of the edges; and
in a case where the provisional positions of the corresponding edges are different from each other, set a provisional position of an edge that is closer to a center position of main scanning of the document as a correct position of the edge.

3. The image processing system according to claim 1, wherein the processor is configured to:
in a case where the provisional positions of the corresponding edges are the same, set the provisional positions of the edges as correct positions of the edges;
in a case where the provisional positions of the corresponding edges are different from each other, determine presence or absence of the document by analyzing image information of a region between a provisional position of an edge that is closer to a center of the document in the main scanning direction and a provisional position of an edge that is farther from the center;
in a case where determination is made that there is no document, set the provisional position of the edge that is closer to a center position of main scanning of the document as a correct position of the edge; and
in a case where determination is made that there is a document, set the provisional position of the edge that is farther from the center as the correct position of the edge.

4. The image processing system according to any one of claims 1 to 3,
wherein the reference position is a start position of main scanning in scanning the document.

5. The image processing system according to any one of claims 1 to 3,
wherein the reference position is a center position of main scanning in scanning the document.

6. The image processing system according to any one of claims 1 to 5, wherein the processor is configured to:
acquire information regarding a standard size of the document; and
determine the standard size of the document from correct positions of the edges on both sides of the document.

7. An image scanning system comprising:
a first scanning unit that is disposed on a transport path of a document and scans a first surface of the document;
a second scanning unit that is disposed on the transport path and scans a second surface of the document; and
the image processing system according to any one of claims 1 to 6 that obtains positions of edges on both sides of the document in a main scanning direction from each image information scanned by the first scanning unit and the second scanning unit.

8. A program for causing a computer to execute a process comprising:
respectively obtaining provisional positions of edges on both sides of a document in a main scanning direction from a preset reference position, from image information obtained by scanning a first surface of the document;
respectively obtaining provisional positions of edges on both sides of the document in the main scanning direction from the reference position, from image information obtained by scanning a second surface of the document; and
respectively comparing the provisional positions of the corresponding edges of the document in the main scanning direction and determining that there is an erroneous detection in the provisional positions of the edges in a case where the provisional positions of the corresponding edges are different from each other.

9. An image processing method comprising:
respectively obtaining provisional positions of edges on both sides of a document in a main scanning direction from a preset reference position, from image information obtained by scanning a first surface of the document;
respectively obtaining provisional positions of edges on both sides of the document in the main scanning direction from the reference position, from image information obtained by scanning a second surface of the document; and
respectively comparing the provisional positions of the corresponding edges of the document in the main scanning direction and determining that there is an erroneous detection in the provisional positions of the edges in a case where the provisional positions of the corresponding edges are different from each other.
